# EUROPÄISCHE PATENTANMELDUNG

(11) **EP 4 717 729 A1**
(43) Veröffentlichungstag der Anmeldung: **01.04.2026**
(21) Anmeldenummer: 25202569.7
(22) Anmeldetag: 16.09.2025
(51) Int. Cl.: C08J 5/18

(54) **INNENVERKLEIDUNGSTEIL FÜR FAHRZEUGE**

(30) Priorität: 16.09.2024 DE 102024208818
(71) Anmelder: Benecke-Kaliko GmbH, 30419 Hannover (DE)
(72) Erfinder: Mani, Joseph, 30419 Hannover (DE); Malner, Thomas, 30419 Hannover (DE); Kode, Chandrasekhar, 30419 Hannover (DE)
(74) Vertreter: Preusser, Andrea

(57) **Zusammenfassung**

Die Erfindung betrifft ein Innenverkleidungsteil eines Fahrzeuges aufweisend mindestens eine Funktionsschicht und eine direkt darüber vollflächig angeordnete Lackschicht, wobei die Funktionsschicht auf einem oder einer Mischung aus thermoplastischen Polyolefinen basiert, dadurch gekennzeichnet, dass die thermoplastischen Polyolefine zu 100 Gew.-% basierend auf dem Gewicht des Rohpolymers aus chemisch und/oder mechanisch recycelten thermoplastischen Polyolefinen bestehen. Außerdem betrifft die Erfindung die Verwendung von chemisch und mechanisch recycelten thermoplastischen Polyolefinen, insbesondere PP, EPR, LDPE, LLPDE und Mischungen daraus, zur Herstellung von Folienlaminaten für Innenverkleidungsteile eines Fahrzeugs, wobei die thermoplastischen Polyolefine zu 100 Gew.-% basierend auf dem Gewicht des Rohpolymers aus mechanisch und/oder chemisch recycelten thermoplastischen Polyolefinen basieren. Die erfindungsgemäßen Produkte weisen unter Berücksichtigung von wirtschaftlichen Aspekten einen reduzierten CO₂-Fußabdruck auf, ohne das Leistungsniveau der Bauteile zu beeinträchtigen.

## Beschreibung

Die Erfindung betrifft ein Innenverkleidungsteil eines Fahrzeuges, insbesondere ein Bodenbelag, eine Türverkleidung, eine Armaturentafel oder ein Dachhimmel, aufweisend mindestens eine Funktionsschicht und eine direkt darüber vollflächig angeordnete Lackschicht, wobei die Funktionsschicht auf einem oder einer Mischung aus thermoplastischen Polyolefinen basiert. Außerdem betrifft die Erfindung Verwendung von chemisch und mechanisch recycelten thermoplastischen Polyolefinen, insbesondere PP, EPR, LDPE, LLPDE und Mischungen daraus, zur Herstellung von Folienlaminaten für Innenverkleidungsteile eines Fahrzeugs, insbesondere ein Bodenbelag, eine Türverkleidung, eine Armaturentafel oder ein Dachhimmel.

Thermoplastische Formkörper, auch Formteile, Formfolien oder - häute, für die Innenverkleidung von Kraftfahrzeugen sind weithin bekannt und werden z. B. verwendet für die Innenverkleidung in Fahrzeugen, also als Überzug von Armaturenbrettern, Türeinsätzen, Sonnenblenden etc. eingesetzt. Solche Formkörper bestehen üblicherweise aus einer mehrschichtigen unterschäumten Kunststoff-Folie, die auf ihrer Oberseite eine dreidimensional strukturierte, geprägte Oberfläche aufweist, nämlich eine so genannte Musterung oder Narbung in verschiedensten Formen und Ausführungen.

Die Formkörper oder Formfolien bestehen oft aus einer kompakten Oberschicht, nämlich der Deck- oder Dekorschicht, die mit der geprägten oder eingeformten Oberfläche versehen ist, und aus einer auf der Unterseite auflaminierten / aufgeklebten Schaumschicht niedriger Dichte als Unterschicht, die eine ansprechende Haptik, d.h. eine angenehm "weiche" Griffigkeit des Bezuges bereitstellt. Dabei ist die Oberschicht auch als "Kompaktfolie" bekannt.

Sowohl die Oberschicht als auch die Unterschicht der Formkörper können dabei aus unterschiedlichen Zusammensetzungen und unterschiedlichen Basisrohstoffen bestehen, also etwa aus Kunststoffen wie PVC (Polyvinylchlorid), PU (Polyurethan), TPO (Polyolefin) etc. oder einer Kombination aus solchen oder ähnlichen Materialien.

Im Stand der Technik sind zur Herstellung solcher Formkörper verschiedene Verfahren bekannt, zum Beispiel das Standard-Tiefziehverfahren, bei dem das Einformen einer vorher hergestellten und durch Walzverfahren mit einer Oberflächen-Prägung oder - Narbung versehenen Folie in eine dreidimensionale, bauteil-geometrische Struktur durch das Einfahren eines die spätere Bauteilkontur bildenden Tiefziehstempels in die Folie erfolgt.

Beim Negativtiefziehen wird eine Folie in eine Negativform hineingezogen, beispielsweise durch Vakuum. Das narbgebende Negativtiefziehen ist nun eine besondere Ausgestaltung des Negativtiefziehens, in dem nicht nur die bauteil-geometrische Struktur, sondern auch die spätere Narbstruktur als Negativ in die Werkzeugoberfläche eingebracht wird.

Die Anforderung an das Ausgangsmaterial sind beim Standardziehverfahren und beim narbgebenden Negativtiefziehen dementsprechend unterschiedlich. Diese Verfahren sind zum Beispiel aus EP-A-1 149 858, DE 4421128A1 und DE102009025995A1 bekannt.

Im Automobilbereich werden in den unterschiedlichsten Bereichen Formkörper aus/mit Folien und Folienlaminate eingesetzt, die auf Polyolefinen basieren. So werden z. B. insbesondere im Bereich von Automobil-Innenverkleidungen Folien oder Folienlaminate aus Polyolefinen durch die oben beschriebenen Tiefziehprozesse oder andere verformende Prozesse weiterverarbeitet, um die gewünschte Form, beispielsweise die Form eines Dachhimmels, eines Armaturenbretts oder einer Türverkleidung zu erhalten.

An die Folien oder Folienlaminate werden hohe Anforderungen hinsichtlich ihrer chemischen und physikalischen Eigenschaften gestellt, so sollen sie z. B. gut verarbeit-, laminier- und prägbar sein, eine hohe Gebrauchstüchtigkeit, d.h. eine hohe Abrieb- und Kratzbeständigkeit, eine hohe Medienbeständigkeit, eine hohe Initialmattigkeit und nach der Verarbeitung eine gute Narbstabilität und eine weiterhin gleichbleibend hohe Mattigkeit aufweisen.

Nachteilig ist dabei, dass die überwiegenden Materialbestandteile von solchen Innenraumverkleidungsteilen auf fossil basierten Rohstoffen basieren und einen entsprechend hohen CO₂-Fußabdruck aufweisen. Zusätzlich sind die Kunststoffbauteile nicht ressourcenschonend, da diese nicht biologisch abbaubar sind und ein wirtschaftlich tragbares Recycling nicht ermöglichen. Damit tragen sie in nicht unerheblichem Maß zur globalen Erderwärmung und Umweltverschmutzung bei.

Aus DE 10 2021 211290 A1 ist ein Verfahren zur Herstellung eines TPO-basierten Folienlaminats bekannt, das für die Innenverkleidung von Fahrzeugen geeignet ist. Durch das beschriebene Verfahren lassen sich Folienreste, die sonst als Abfall angefallen wären, teilweise in den Herstellungsprozess zurückführen und die Materialeffizienz des Verfahrens verbessern. Offenbart wird die Verwendung von höchstens 75 Gew.-% eines post-consumer und/oder post-industrial Polyolefinrezyklats mit einem Schmelzpunkt kleiner 165 °C. Die Verwendung höherer Anteile des recycelten Materials ist nicht möglich, da die Qualitätsanforderungen an das Produkt sonst nicht eingehalten werden können (z.B. unangenehmer Geruch).

Post-consumer und post-industrial Polyolefinabfälle fallen bei Verbrauchern und in der Industrie in großen Mengen an, und stellen theoretisch eine stabile Ressource für Kunststoffe dar. Allerdings bestand bei solchen Abfällen in der Vergangenheit meist das Problem von deutlich wahrnehmbaren Geruchsausdünstungen, was zur Folge hatte, dass solche Rezyklate zur Herstellung von Produkten mit im Vergleich zur Vorprodukt niedrigerer Qualität (sogenanntes "Downcycling") eingesetzt wurden. Dabei war auch unklar, inwieweit die mechanischen Eigenschaften der Rezyklate gegenüber dem "Virgin"-Produkt durch den Aufbereitungsprozess beeinträchtigt, werden, was einer Verwendung zur Herstellung von Produkten mit höheren Qualitätsanforderungen entgegenstehen würde. Da der Bedarf an minderqualitativen Produkten begrenzt ist, werden solche Abfälle heute noch in vielen Fällen rein thermisch verwertet (d.h. verbrannt).

Chemisch recycelte Rohstoffe sind Rohstoffe, die aus schwer recycelbaren Kunststoffabfällen aufbereitet werden. Dabei wird eine Pyrolyse-Technologie eingesetzt, um die Kunststoffabfälle zu zerlegen. Aus dem Naphtha-Schnitt kann Virgin Polymer polymerisiert werden. Auf die Art hergestellte recycelte Produkte sind sehr teuer und aufwändig in der Herstellung, unterscheiden sich in der chemischen Qualität nur unwesentlich von den virgin Polymeren.

Aufgabe der Erfindung war es ein Innenverkleidungsteil zu entwickeln, dass einen minimierten CO₂-Fußabdruck und sonstige Vorteile im Sinne der Nachhaltigkeit aufweist. Essenziell ist dabei die Erhaltung von mindestens gleichbleibenden mechanischen Eigenschaften des Bauteils, insbesondere mit dem Fokus auf das oberflächengestaltende Folienlaminat. Das Innenverkleidungsteil sollte mit Blick auf die Mechanik, Haptik, Geruch und Verarbeitbarkeit sich von einem fossil-basierten Produkt nicht oder nur unwesentlich unterscheiden. Bezüglich der Verarbeitbarkeit ist aus wirtschaftlichen Gründen ein Folienlaminat erforderlich, das mit dem Positiv oder Negativ- Tiefziehverfahren verarbeitet werden kann und eine qualitative Narbabbildung zulässt.

Gelöst wird diese Aufgabe durch die Merkmale der Ansprüche 1 und 10. Weitere vorteilhafte Ausbildungen sind in den Unteransprüchen offenbart.

Die Erfindung betrifft ein Innenverkleidungsteil eines Fahrzeuges aufweisend ein Folienlaminat, das die Oberfläche des Verkleidungsteils ausbildet. Ein solches Bauteil kann grundsätzlich alle inneren Oberflächen eines Fahrzeugs, insbesondere eines Kraftfahrzeugs. Besonders vorteilhaft im Sinne der vorliegenden Erfindung ist es, wenn das Folienlaminat den Bodenbelag, eine Türverkleidung, eine Armaturentafel oder ein Dachhimmel des Fahrzeugs ausbildet.

Das Folienlaminat weist mindestens eine Funktionsschicht und eine direkt darüber vollflächig angeordnete Lackschicht auf.

Die Funktionsschicht basiert auf einem oder einer Mischung aus thermoplastischen Polyolefinen, die zu 100 Gew.-% basierend auf dem Gewicht des Rohpolymers aus chemisch und/oder mechanisch recycelten thermoplastischen Polyolefinen bestehen. Ein derartiges Bauteil zeichnet sich in erster Linie durch eine bessere Ökobilanz aus, was durch den errechneten Produkt CO₂-Fußabdruck (PCF, *product carbon footprint*) erkennbar ist. Der PCF ist die Summe der Treibhausgasemissionen (THG), die direkt und indirekt durch ein Produkt verursacht werden. Er wird berechnet, indem die Emissionen aus jeder Phase des Lebenszyklus eines Produkts (Materialproduktion, Herstellung, Verwendung und Entsorgung) addiert werden. Während ein übliches Folienlaminat mit einem Flächengewicht von 600 g/m² für Instrumententafeln oder Türverkleidungen einen PCF von 1,7 kgCO₂ äquiv/ m² aufweist, lässt sich durch Verwendung des erfindungsgemäßen Folienlaminats der PCF auf 1,3 kgCO₂ äquiv/ m² reduzieren (PCF Cradle to Gate nach Life-Cycle Assessment ISO 14040 und ISO 14067).

In vorteilhaften Ausführungsformen weist das Folienlaminat zusätzlich bioattribuiertes, biobasiertes o.ä. Material, wodurch sich der PCF je nach Anteil der bioattribuierten Materials weiter reduzieren lässt. Unter wirtschaftlichen Aspekten ist ein zu hoher Anteil an bioattribuiertem Material jedoch nachteilig und deshalb nicht bevorzugt.

Bereits aus Kostengründen ist ein Innenverkleidungsteil mit einem mechanisch recyceltem TPO-Anteil von 100 Gew.-% zu bevorzugen. Allerdings bringt mechanisches Rezyklat immer einen gewissen Teil Verunreinigung mit sich, was sich bei der Verwendung im Sinne der Erfindung vor allem in einem unangenehmen Geruch äußert. Die Geruchsanforderungen können erfüllt werden, indem das mechanische Rezyklat mit einer besonders niedrigen Verunreinigung verwendet wird. Geringere Geruchsbildungen können jedoch vermieden werden, indem während des Verarbeitungsprozesses geeignete Zusätze hinzugefügt werden (z.B. Wasser und/oder CO₂) und anschließend ein Entgasungsprozess nachgeschaltet wird.

In bevorzugten Ausführungsformen ist das Innenverkleidungsteil derart ausgebildet, dass das gesamte Folienlaminat zu mindestens 90 Gew.-%, insbesondere mindestens 95 Gew.-%, bezogen auf das Gesamtgewicht des Folienlaminats, aus thermoplastischen Polyolefinen gebildet wird. Ein derartiges Konstrukt kann ohne vorherige Aufbereitung in seiner Gesamtheit eingeschmolzen und der Wiederverwertung zugänglich gemacht werden. So kann ein Innenverkleidungsteil auch mindestens 30 Gew.-% basierend auf dem Gewicht des Polymergemischs von auf diese Weise mechanisch recycelten TPOs aufweisen. Auf diese Weise wird die Nachhaltigkeit des Innenverkleidungsteils zusätzlich erhöht.

Die Lackschicht basiert eine für den Anwendungszweck der fachkundigen Person bekannten Zusammensetzung und basiert grundsätzlich auf einem Polymer. Besonders vorteilhaft erwiesen sich Polyurethan-basierte Lacke zur Oberflächenbildung von erfindungsgemäßen Folienlaminaten, die die Oberfläche eines Innenverkleidungsteils ausbilden. Diese Art der Lacke ist besonders kompatibel mit der Funktionsschicht, durch die die Anforderungen des Bauteils an die Optik und Haptik garantiert werden können. Zusätzlich dient der Lack dazu eine notwendige Oberflächenbeständigkeit gegen Öle (z.B. Sonnenöl), Reinigungsmittel mit Alkohol, säurehaltige Lebensmittel, Kaffee, generellen Abrieb und Kratzer einzustellen. Je nach Bauteilart hat die Lackschicht unterschiedliche Schichtdicken. In der Regel kleiner als 0,1 mm, vorzugsweise kleiner als 0,05 mm und weiter bevorzugt kleiner 0,01 mm. Je dünner die Lackschicht ausgebildet ist, desto höher ist der Anteil des recyclingsfähigen TPO in dem Folienlaminat.

In einigen Ausführungsformen weist das Innenverkleidungsteil ein Folienlaminat auf, das aus insgesamt drei Schichten gebildet wird.

In diesen Ausführungsformen kann unterhalb der kompakten Funktionsschicht sich ein vollflächig angeordnetes Polyolefin-basiertes, textiles Flächengebilde befinden. Das textile Flächengebilde wird vorzugsweise aus Polypropylen-Fasern gebildet.

In alternativen Ausführungsformen kann unterhalb der kompakten Funktionsschicht sich eine vollflächig angeordnete Polyolefin-basierte, geschäumte Basisschicht befinden. Diese Anordnung führt zu einer weicheren Haptik des Bauteils.

Grundsätzlich können alle chemisch oder mechanisch recycelten thermoplastischen Polyolefine für die Erfindungsgemäßen Bauteile verwendet werden. Aus verarbeitungstechnischen Gründen sind Folienlaminate bevorzugt, die einen Schmelzpunkt von 35 °C bis 165 °C aufweisen. Derartige Mischungen lassen sich in Extrusionsverfahren auf übliche Art und Weise verarbeiten und so erfindungsgemäße Bauteile herstellen. Geeignete Verfahren zur Herstellung derartiger Bauteile sind z.B. aus EP3904041A2, EP2263857A2 und DE102021211290A1 bekannt.

Besonders bevorzugte thermoplastische Polyolefine sind mindestens zwei der Polymere ausgewählt aus der Liste bestehend aus Polyethylen (PE), Polypropylen (PP), Copolymere aus Polyethylen und Polypropylen, thermoplastische Elastomere (TPO-E) und thermoplastische Vulkanisate (TPV) und Mischungen daraus. In besonders bevorzugten Ausführungsformen sind die thermoplastischen Polyolefine eine Mischung aus mindestens PP, EPR, LLDPE und LDPE.

In einigen Ausführungsformen sind die thermoplastischen Polyolefine eine Mischung aus chemisch und mechanisch recycelten thermoplastischen Polyolefinen. Damit lässt sich unter Berücksichtigung eines minimierten PCF und optimierten Kosten eine qualitativ hervorragende Konstruktion darstellen.

Die Erfindung betrifft außerdem die Verwendung von chemisch und mechanisch recycelten thermoplastischen Polyolefinen, insbesondere PP, EPR, LDPE, LLPDE und Mischungen daraus, zur Herstellung von Folienlaminaten für Innenverkleidungsteile eines Fahrzeugs, wobei die thermoplastischen Polyolefine zu 100 Gew.-% basierend auf dem Gewicht des Rohpolymers aus mechanisch und/oder chemisch recycelten thermoplastischen Polyolefinen basieren.

### Beispiele

In der Tabelle 1 sind die Rezepturen zweier erfindungsgemäßer, nachhaltiger Beispiele 1 und 2 einem Vergleichsbeispiel 1, das auf virgin-Polymeren basiert gegenübergestellt. Beispiele 1 und 2 unterscheiden sich dadurch, dass Beispiel 1 ausschließlich auf chemischen Rezyklaten und Beispiel 2 auf chemischen und mechanischen Rezyklaten basiert. Aus allen drei Zusammensetzungen wird eine Funktionsschicht hergestellt. Die Eigenschaften der verwendeten Polymere befinden sich in Tabelle 2.

**Tabelle 1: Funktionsschichtzusammensetzungen in phr (parts per hundred)**

| Substanz | Vergleichsbeispiel 1 | Beispiel 1 | Beispiel 2 |
|---|---|---|---|
| r-PP fossilbasiert | 15 | | |
| r-PP aus chem. Rezyklat | | 15 | |
| r-PP/EPR fossilbasiert | 30 | | |
| r-PP/EPR aus chem. Rezyklat | | 30 | 30 |
| LLDPE fossilbasiert | 30 | | |
| LLDPE aus chem. Rezyklat | | 30 | |
| LLDPE aus PCR | | | 40 |
| LDPE fossilbasiert | 25 | | |
| LDPE aus chem. Rezvklat | | 25 | |
| LDPE aus PCR | | | 30 |
| Pigment | 1 | 1 | 1 |
| Stabilisator | 2 | 2 | 2 |

Erläuterungen zu den Substanzen:
r-PP fossilbasiert: random Polypropylen aus Erdöl Basis
r-PP aus chem. Rezyklat: random Polypropylen-Rezyklate aus chemisch recyceltem Prozess
r-PP/EPR fossilbasiert: random Polypropylen/Ethylen-Propylen-Rubber aus Erdöl Basis
r-PP/EPR aus chem. Rezyklat: random Polypropylen/ Ethylen-Propylen-Rubber
Rezyklatmischung aus chemisch recyceltem Prozess
LLDPE fossilbasiert: Linear Low Density Polyethylen aus Erdöl Basis
LLDPE aus chem. Rezyklat: Linear Low Density Polyethylen aus chemisch recyceltem Prozess
LLDPE aus PCR: Linear Low Density Polyethylen aus Post Consumer Recycling
LDPE fossilbasiert: Low Density Polyethylen aus Erdöl Basis
LDPE aus chem. Rezyklat: Low Density Polyethylen aus chemisch recyceltem Prozess
LDPE aus PCR: Low Density Polyethylen aus Post Consumer Recycling

**Tabelle 2: Eigenschaften der Polymere**

| Substanz | MFI bei 190°C; 2,16 kg | MFI bei 230°C; 2,16 kg | Dichte [g/cm^{3]} | Tm* [°C] | Flexural Modulus [MPa] |
|---|---|---|---|---|---|
| r-PP fossilbasiert | | 8,5 | 0,900 | 150 | 1100 |
| r-PP aus chem. Rezyklat | | 8,0 | 0,900 | 150 | 1100 |
| PP/EPR fossilbasiert | | 0,5 | 0,880 | 142 | 130 |
| PP/EPR aus chem. Rezyklat | | 0,8 | 0,856 | 141 | 500 |
| LLDPE fossilbasiert | 1,0 | | 0,857 | 37 | 4,4 |
| LLDPE aus chem. Rezyklat | 0,5 | | 0,868 | 47 | 8 |
| LLDPE aus PCR | 2,5 | | 0,872 | 120 | 200 |
| LDPE fossilbasiert | 1,9 | | 0,926 | 113 | 255 |
| LDPE aus chem. Rezyklat | 2,1 | | 0,922 | 111 | 250 |
| LDPE aus PCR | 0,35 | | 0,922 | 112 | 250 |

| | | | | | |
|---|---|---|---|---|---|
| *Die Schmelzetemperatur Tm wird mittels DIN EN ISO 11357-5 Ausgabe 2024-04 geprüft. | | | | | |

Anschließend wurden die o.g. Polymerzusammensetzungen im Doppelschneckenextruder bei den in Tabelle 3 gezeigten Zylinder- und Düsentemperaturen verarbeitet. Es wurden aus den Beispielen 1, 2 und Vergleichsbeispiel 1 jeweils eine einschichtige Folie bestehend aus der reinen Funktionsschicht hergestellt und vermessen (siehe Tabelle 4). Die resultierenden Folien wiesen eine Dicke von 0,5 mm und ein Flächengewicht von 450 g/m² auf.

**Tabelle 3: Zylinder-und Düsentemperaturen in °C bei der Folienextrusion**

| | Zone 1 | Zone 2 | Zone 3 | Zone 4 | Zone 5 | Zone 6 |
|---|---|---|---|---|---|---|
| Zylinder | 190 | 190 | 190 | 190 | 195 | 25 |
| Düse | 200 | 200 | 200 | 200 | 200 | 200 |

**Tabelle 4: Mechanische-Eigenschaften der Funktionsschicht**

| Prüfung (Prüfmethode ISO 527-3-T5) | Vergleichs-Beispiel 1 | Beispiel 1 | Beispiel 2 |
|---|---|---|---|
| Emod- längs [N/mm²] | 103 | 197 | 190 |
| Emod- quer [N/mm²] | 41 | 120 | 220 |
| Zugfestigkeit längs [MPa] | 18 | 20 | 60 |
| Zugfestigkeit quer [MPa] | 14 | 17 | 75 |
| Zugdehnung längs [%] | 1397 | 1247 | 1150 |
| Zugdehnung quer [%] | 1565 | 1322 | 1200 |

Zusätzlich wurden Mischungen gemäß den o.g. Rezepturen zu Folienlaminaten verarbeitet. Die Folienlaminate wurden am Doppelschneckenextruder gemäß Tabelle 3 hergestellt. Die 0,5 mm dicke Funktionsschicht wurde auf eine 2 mm dicke Schaumschicht mit einer Dichte 67 kg/m³ (95 Gew.-% PE/PP und 5 Gew.-% Treibmittel) kaschiert und mit einem PU-Lack an der Oberfläche (Schichtdicke 10 µm) vollflächig behandelt.

Einige charakteristische Verarbeitungseigenschaften und Haptik- und Geruchseigenschaften der Folien der resultierenden Folienlaminate sind in Tabelle 5 und 6 gezeigt.

**Tabelle 5: Verarbeitungseigenschaften der Folienlaminate**

| Substanz | Vergleichs-beispiel 1 | Beispiel 1 | Beispiel 2 |
|---|---|---|---|
| Extrusionsverhalten | i.O. | i.O. | i.O. |
| Tiefziehen im negative Prozess (IMG) | prägnante Narbe, kein Aufglänzen | prägnante Narbe, kein Aufglänzen | prägnante Narbe, kein Aufglänzen |
| Tᵥₒᵣ = 180°C | | | |
| T_{rück} = 190°C | | | |

**Tabelle 6: Haptik- und Geruchseigenschaften der Folien**

| Substanz | Vergleichsbeispiel 1 | Beispiel 1 | Beispiel 2 |
|---|---|---|---|
| Haptik (manuell) | Angenehm, weich | Angenehm, weich | Angenehm, härter |
| Geruch VDA 270 C3 Ausgabedatum 05/2022 [Note] | 3 | 3 | 3 |

Diese Folienlaminate wurden bei 200°C in einem negativ-Tiefziehwerkzeug tiefgezogen und zu einem Türverkleidungsteil verformt. Die Narbabbildung fand im Werkzeug statt. Es konnten keine wesentlichen Unterschiede zwischen den nachhaltigen Produkten und dem Vergleichsbeispiel 1 festgestellt werden. Das Folienlaminat, welches in der Türverkleidung des Vergleichsbeispiels 1 verarbeitet wurde, wies einen PCF von 1,7 kgCO2 äquiv/ m², das Folienlaminat, welches in der Türverkleidung des Beispiels 1 wies einen PCF von 1,5 kgCO2 äquiv/ m² und des Beispiels 2 einen PCF von 1,3 kgCO2 äquiv/ m² auf (PCF Cradle to Gate nach Life-Cycle Assessment ISO 14040 und ISO 14067).

## Patentansprüche

1. Innenverkleidungsteil eines Fahrzeuges aufweisend ein Folienlaminat, das die Oberfläche des Verkleidungsteils ausbildet, das Folienlaminat aufweisend mindestens eine Funktionsschicht und eine direkt darüber vollflächig angeordnete Lackschicht, wobei die Funktionsschicht auf einem oder einer Mischung aus thermoplastischen Polyolefinen basiert, **dadurch gekennzeichnet, dass** die thermoplastischen Polyolefine zu 100 Gew.-% basierend auf dem Gewicht des Rohpolymers aus chemisch und/oder mechanisch recycelten thermoplastischen Polyolefinen bestehen.

2. Innenverkleidungsteil eines Fahrzeuges nach Anspruch 1, wobei das gesamte Folienlaminat zu mindestens 90 Gew.-%, insbesondere mindestens 95 Gew.-%, bezogen auf das Gesamtgewicht des Folienlaminats, aus thermoplastischen Polyolefinen gebildet wird und das gesamte Folienlaminat durch einen Schmelzprozess der Wiederverwertung zugänglich ist.

3. Innenverkleidungsteil eines Fahrzeuges nach einem der Ansprüche 1 oder 2, wobei die im Folienlaminat verwendeten thermoplastischen Polyolefine einen Schmelzpunkt von 35 °C bis 165 °C DIN EN ISO 11357-5, 2024 aufweisen.

4. Innenverkleidungsteil eines Fahrzeuges nach einem der Ansprüche 1 bis 3, wobei das Folienlaminat außerdem ein Polyolefin-basiertes, textiles Flächengebilde aufweist, das unterhalb der kompakten Funktionsschicht vollflächig angeordnet ist.

5. Innenverkleidungsteil eines Fahrzeuges nach einem der Ansprüche 1 bis 3, wobei das Folienlaminat außerdem ein Polyolefin-basierte, geschäumte Basisschicht aufweist, das unterhalb der kompakten Funktionsschicht vollflächig angeordnet ist.

6. Innenverkleidungsteil eines Fahrzeuges nach einem der Ansprüche 1 bis 5, wobei die im Folienlaminat verwendeten thermoplastischen Polyolefine mindestens zwei der Polymere ausgewählt aus der Liste bestehend aus Polyethylen (PE), Polypropylen (PP), Copolymere aus Polyethylen und Polypropylen, thermoplastische Elastomere (TPO-E) und thermoplastische Vulkanisate (TPV), umfassen.

7. Innenverkleidungsteil eines Fahrzeuges nach Anspruch 6, wobei die thermoplastischen Polyolefine eine Mischung aus mindestens PP, EPR, LLDPE und LDPE sind.

8. Innenverkleidungsteil eines Fahrzeuges nach Anspruch 7, wobei die thermoplastischen Polyolefine eine Mischung aus chemisch und mechanisch recycelten thermoplastischen Polyolefinen sind.

9. Innenverkleidungsteil eines Fahrzeuges nach einem der Ansprüche 1 bis 8, wobei das Innenverkleidungsteil ein Bodenbelag, eine Türverkleidung, eine Armaturentafel oder ein Dachhimmel ist.

10. Verwendung von chemisch und mechanisch recycelten thermoplastischen Polyolefinen, insbesondere PP, EPR, LDPE, LLPDE und Mischungen daraus, zur Herstellung von Folienlaminaten für Innenverkleidungsteile eines Fahrzeugs, wobei die thermoplastischen Polyolefine zu 100 Gew.-% basierend auf dem Gewicht des Rohpolymers aus mechanisch und/oder chemisch recycelten thermoplastischen Polyolefinen basieren.
